# EUROPÄISCHE PATENTANMELDUNG

(11) **EP 0 967 550 A2**
(43) Veröffentlichungstag der Anmeldung: **29.12.1999**
(21) Anmeldenummer: 99440169.3
(22) Anmeldetag: 25.06.1999
(51) Int. Cl.: G06F 11/00, G06F 11/22

(54) **Bedienplatzeinrichtung für signaltechnische Anlagen mit Fehlerüberprüfung**

(30) Priorität: 26.06.1998 DE 19828452
(71) Anmelder: ALCATEL, 75008 Paris (FR)
(72) Erfinder: Richter, Andreas, 71229 Leonberg (DE)
(74) Vertreter: Brose, Gerhard, Dipl.-Ing.

(57) **Zusammenfassung**

Die Erfindung bezieht sich auf Bedienplatzrechner (BPR) für signaltechnische Anlagen, die in einen Sperrzustand übergehen, wenn bei der Durchführung von Überprüfungen ein Fehler festgestellt wird. Bei bekannten Bedienplatzrechnern kann ein solcher Sperrzustand nur von einem Instandhaltungsbeauftragten nach wieder aufgehoben werden.

Erfindungsgemäß ist vorgesehen, daß nach dem Übergang in den Sperrzustand die Bedienperson die Möglichkeit erhält, durch Eingabe eines speziellen Befehls die Durchführung einer zweiten Überprüfung des Bedienplatzrechners oder Teilen davon anzustoßen. Falls bei dieser zweiten Überprüfung kein Fehler festgestellt wird, so erhält die Bedienperson die Möglichkeit, den Sperrzustand wieder aufzuheben. Die Verfügbarkeit des Bedienplatzrechner wird dadurch wesentlich gesteigert.

## Beschreibung

Die Erfindung betrifft einen Bedienplatzrechner für signaltechnische Anlagen nach dem Oberbegriff des Anspruchs 1. Die Erfindung betrifft ferner ein Verfahren zum Betrieb eines solchen Bedienplatzrechners nach dem Oberbegriff des Anspruchs 3 sowie einen Datenträger mit einem darauf gespeicherten Datenverarbeitungsprogramm zur Steuerung eines Bedienplatzrechners nach dem Oberbegriff des Anspruchs 4.

Ein Bedienplatzrechner nach dem Oberbegriff des Anspruchs 1 ist bekannt aus der Offenlegungsschrift DE-A1-43 32 143. Bei einem dort beschriebenen Ausführungsbeispiel führt ein signaltechnisch sicher ausgeführter Bedien- und Anzeigerechner einem Bedienplatzrechner Prozeßabbilder zu. Die Prozeßabbilder werden in zwei unterschiedlichen rechnerinternen Kanälen gespeichert und in einem gemeinsamen Graphiksystem zu Meldebildern autbereitet. Um die Unabhängigkeit der beiden Kanäle zu überprüfen, werden in regelmäßigen Abständen sowie bei Eingabe sicherheitskritischer Befehle verschiedene Prüfvorgänge durchgeführt. Allen dort beschriebenen Prüfvorgängen ist gemeinsam, daß Ergebnisse miteinander verglichen werden und bei einer dabei festgestellten Abweichung eine Warnung an die Bedienperson erfolgt.

Bei den bekannten Bedienplatzrechnern wird neben der Abgabe einer Warnung eine Sperre ausgelöst, die die Ausführung weiterer sicherheitskritischer Befehle unterbindet. Zugelassen sind in diesem Zustand lediglich Regelbedienungen, d. h. Befehle, die nicht sicherheitskritisch sind. Damit wird wirkungsvoll verhindert, daß ein als fehlerhaft erkannter Bedienplatzrechner bei sicherheitskritischen Prozessen in irgendeiner Form mitwirkt. Der Sperrzustand wird der Bedienperson meist auf dem Monitor in graphisch auffälliger Weise angezeigt.

Sicherheitskritische Befehle werden erst dann wieder vom Bedienplatzrechner angenommen, wenn dieser von einem zugelassenen Instandhaltungsbeauftragten untersucht, ggf. instandgesetzt und anschließend freigegeben worden ist. Nachteilig ist dabei, daß bis zur Freigabe durch den Instandhaltungsbeauftragten der Bedienplatzrechner nur noch sehr eingeschränkt nutzbar ist.

Es ist daher Aufgabe der Erfindung, einen Bedienplatzrechner für signaltechnische Anlagen anzugeben, der gegenüber bekannten Bedienplatzrechnern eine erhöhte Verfügbarkeit aufweist.

Diese Aufgabe wird gelöst durch einen Bedienplatzrechner mit den Merkmalen des Anspruchs 1. Erfindungsgemäß ist der Bedienplatzrechner so ausgeführt, daß bei Eintreten eines Sperrzustandes die Bedienperson die Möglichkeit erhält, durch Eingabe eines speziellen Befehls die Durchführung einer zweiten Überprüfung des Bedienplatzrechners oder Teilen davon anzustoßen. Der Sperrzustand ist erst dann wieder von der Bedienperson aufhebbar, wenn im Verlauf der zweiten Überprüfung kein Fehler erkannt wird. Damit erlaubt die Erfindung, einen einmal in einen Sperrzustand geratenen Rechner weiter zu betreiben, sofern bei erneuter Überprüfung kein Fehler mehr festgestellt wird. Als weiterer Vorteil ist zu nennen, daß die Bedienperson nun ganz bewußt die Überprüfung anstoßen und verfolgen kann. Dadurch erhöht sich sein Vertrauen in die Sicherheit des Bedienplatzrcchners. Bislang werden die Überprüfungen ausschließlich automatisch eingeleitet und bleiben daher der Bedienperson weitgehend verborgen.

Vorzugsweise ist diese zweite Überprüfung umfassender als die bereits durchgeführte erste Überprüfung. Sie schließt nach Möglichkeit alle zur Verfügung stehenden Prüfungmaßnahmen ein, mit denen die einwandfreie Funktion des Bedienplatzrechners verifiziert werden kann.

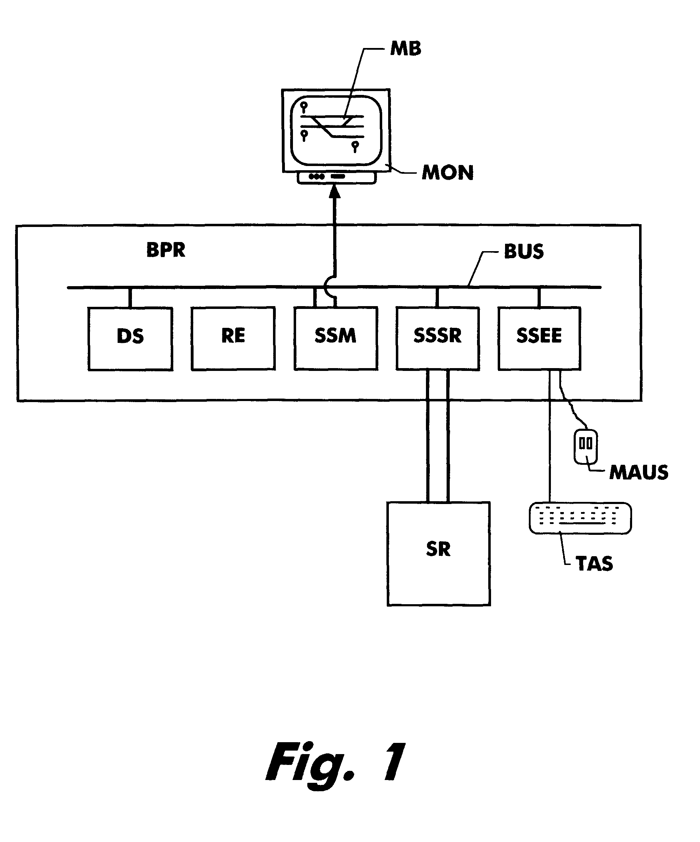

Die Erfindung wird nachfolgend anhand der **Fig. 1** erläutert. Fig. 1 zeigt in einer vereinfachten schematischen Darstellung einen erfindungsgemäßen Bedienplatzrechner BPR. Der Bedienplatzrechner BPR verfügt über eine zentrale Rechneneinheit RE, einen Datenspeicher DS sowie über Schnittstellen SSM, SSSR und SSEE. Die Kommunikation innerhalb des Bedienplatzrechners erfolgt über einen Datenbus BUS. Über die Schnittstelle SSSR sind zwischen dem Bedienplatzrechner BPR und einem sicheren Rechner SR Daten austauschbar. Bei dem sicheren Rechner SR kann es sich beispielsweise um ein 2-aus-3-Rechnersystem handeln. Über die Schnittstelle SSEE lassen sich eine oder mehrere Eingabeeinrichtungen anschließen, mit deren Hilfe eine Bedienperson dem Bedienplatzrechner BPR Befehle zuführen kann. Bei den Eingabeeinrichtungen handelt es sich bei dem in Fig. 1 dargestellten Ausführungsbeispiel um eine Tastatur TAS und eine Maus MAUS. Schließlich ist eine Schnittstelle SSM zum Anschluß eines Monitors MON vorhanden. An diese Schnittstelle SSM können auch noch weitere, in Fig. 1 nicht dargestellte Monitore angeschlossen sein.

Im Datenspeicher DS ist ein Datenverarbeitungsprogramm gespeichert, welches bei Abarbeitung durch die Recheneinheit RE die Erzeugung von Meldebildern MB und deren Anzeige auf dem Monitor MON steuert. Die Recheneinheit greift dazu auf Prozeßdaten zurück, die der sicherer Rechner SR dem Bedienplatzrechner BPR zuführt. Die Bedienperson kann über die Eingabeeinrichtungen Einfluß darauf nehmen, welche Meldebilder in welcher Weise (vergrößerte Darstellung etc.) auf dem Monitor MON angezeigt werden.

Prozeßrelevante Eingaben der Bedienperson werden vom Bedienplatzrechner BPR an den sicheren Rechner SR weitergeleitet. Der sichere Rechner SR prüft, ob die Eingabe als sicherheitskritischer Befehl zu werten ist. Derartige sicherheitskritische Befehle werden häufig auch als "Kommando-Freigabepflichtige Befehle" (KF-Befehle) bezeichnet. Stellt der sichere Rechner SR fest, daß es sich um einen sicherheitskritischen Befehl handelt, so veranlaßt er die Durchführung einer ersten Überprüfung des Bedienplatzrechners BPR. Beispiele für derartige Überprüfungen sind der oben bereits angeführten Offenlegungsschrift DE-A1-43 32 143 entnehmbar.

Wird bei dieser ersten Überprüfung ein Fehler festgestellt, so wird unverzüglich die oben bereits erwähnte Sperre eingerichtet. Sicherheitskritische Befehle werden von nun an sofort vom Bedienplatzrechner BPR zurückgewiesen; möglich sind lediglich Eingaben, die nicht sicherheitskritisch sind. Der Bedienperson wird die Einrichtung der Sperre auf dem Monitor deutlich angezeigt.

Erfindungsgemäß ist nun vorgesehen, daß die Bedienperson zu diesem Zeitpunkt die Möglichkeit erhält, durch Eingabe eines speziellen Befehls die Durchführung einer zweiten Überprüfung des Bedienplatzrechners oder Teilen davon anzustoßen. Die Möglichkeit kann der Bedienperson beispielsweise dadurch gegeben werden. daß am Monitor ein vorher ausgegrautes graphisches Symbol nun in einer auffälligen Farbe dargestellt wird. Durch Anklicken des Symbols mit der Maus oder Eingabe eines Befehles über Tastatur kann die Bedienperson die zweite Überprüfung anstoßen.

Falls bei der zweiten Überprüfung kein Fehler festgestellt wird, so erhält die Bedienperson die Möglichkeit, durch einen speziellen Befehl den Sperrzustand wieder aufzuheben. Der Bedienplatzrechner BPR geht dann wieder in den ursprünglichen Zustand zurück, d. h. es werden nun auch wieder sicherheitsrelevante Befehle akzeptiert und ausgeführt. Der angesprochene spezielle Befehl wird vorzugsweise durch Anklicken eines entsprechenden Symbols mit der Maus in den Bedienplatzrechner BPR eingegeben. Alternativ hierzu kann der Bedienplatzrechner BPR auch selbständig wieder, d. h. ohne Aufforderung durch die Bedienperson, wieder den Sperrzustand aufheben, wenn bei der zweiten Überprüfung kein Fehler festgestellt wurde.

Vorzugsweise geht die zweite Überprüfung im Umfang über die erste Prüfung hinaus. Dies kann einerseits bedeuten, daß die gleichen Prüfungsmaßnahmen mehrfach durchgeführt werden. Es kann ebenso bedeuten, daß zusätzliche Prüfungsmaßnahmen durchgeführt werden. Die erste Überprüfung findet während des laufenden Betriebs des Bedienplatzrechners BPR statt und muß deshalb in sehr kurzer Zeit durchgeführt werden. Bei der zweiten Überprüfung steht mehr Zeit zur Verfügung, da der Bedienplatzrechners BPR nun ohnehin nur noch eingeschränkt verwendbar ist. Aus Sicherheitserwägungen heraus sollten diese Prüfroutinen auch solche Fehler aufdecken, die bei routinemäßig durchgeführten Überprüfungen aus Zeitgründen nicht erkennbar sind. Die Prüfungsmaßnahmen sollten sich daher nicht nur auf den Vergleich von Bildspeichern etc. beschränken, sondern auch weitergehende Prüfungen der Hardware mit einbeziehen (RAM- und CPU-Tests etc.).

## Patentansprüche

1. Bedienplatzrechner (BPR) für signaltechnische Anlagen mit:
a) einer Schnittstelle (SSM), an die ein Monitor (MON) zur Anzeige eines Meldebildes (MB) anschließbar ist,
b) einer Recheneinheit (RE) zur Erzeugung des Meldebildes,
c) einer Schnittstelle (SSEE) zu einer Eingabeeinrichtung (TAS, MAUS), über die dem Rechner durch eine Bedienperson Befehle zuführbar sind,
d) einem Datenspeicher (DS), in dem ein die Recheneinheit (RE) steuerndes Datenverarbeitungsprogramm gespeichert ist, welches zumindest dann, wenn die Bedienperson dem Bedienplatzrechner einen sicherheitskritischen Befehl zuführt, die Durchführung einer ersten Überprüfung des Bedienplatzrechners oder Teilen davon veranlaßt,
**dadurch gekennzeichnet,**
e) daß dann, wenn bei der ersten Überprüfung ein Fehler festgestellt wird, das Datenverarbeitungsprogramm veranlaßt, daß die Bedienperson die Möglichkeit erhält, durch Eingabe eines speziellen Befehls die Durchführung einer zweiten Überprüfung des Bedienplatzrechners oder Teilen davon anzustoßen.

2. Bedienplatzrechner nach Anspruch 1, bei der die zweite Überprüfung im Umfang über die erste Überprüfung hinausgeht.

3. Verfahren zum Betrieb eines Bedienplatzrechners (BPR) für signaltechnische, bei dem dann, wenn eine Bedienperson dem Bedienplatzrechner einen sicherheitskritischen Befehl zuführt, die Durchführung einer ersten Überprüfung des Bedienplatzrechners oder Teilen davon veranlaßt wird,
**dadurch gekennzeichnet,**
daß dann, wenn bei der ersten Überprüfung ein Fehler festgestellt wird, die Bedienperson die Möglichkeit erhält, durch Eingabe eines speziellen Befehls die Durchführung einer zweiten Überprüfung des Bedienplatzrechners oder Teilen davon anzustoßen.

4. Datenträger mit einem darauf gespeicherten Datenverarbeitungsprogramm, welches einen Bedienplatzrechner für signaltechnische Anlagen so steuert, daß, wenn eine Bedienperson dem Bedienplatzrechner einen sicherheitskritischen Befehl zuführt, die Durchführung einer ersten Überprüfung des Bedienplatzrechners oder Teilen davon veranlaßt wird,
**dadurch gekennzeichnet,**
daß das Datenverarbeitungsprogramm dann, bei der ersten Überprüfung ein Fehler festgestellt wird, den Bedienplatzrechner veranlaßt, daß die Bedienperson die Möglichkeit erhält, durch Eingabe eines speziellen Befehls die Durchführung einer zweiten Überprüfung des Bedienplatzrechners oder Teilen davon anzustoßen.
